# EUROPÄISCHE PATENTSCHRIFT

(11) **EP 2 263 867 B1**
(45) Veröffentlichungstag und Bekanntmachung des Hinweises auf die Patenterteilung: **07.03.2012**
(21) Anmeldenummer: 09009118.2
(22) Anmeldetag: 13.07.2009
(51) Int. Cl.: B32B 27/00, E04F 15/02

(54) **Laminatbodenpaneel**
Laminate floor panel
Panneau de sol laminé

(30) Priorität: 16.06.2009 EP 09007871
(43) Veröffentlichungstag der Anmeldung: 22.12.2010
(73) Patentinhaber: hülsta-werke Hüls GmbH & Co. KG, 48703 Stadtlohn (DE)
(72) Erfinder: Schwitte, Richard, 48712 Gescher (DE)
(74) Vertreter: Gesthuysen, von Rohr & Eggert

(56) Entgegenhaltungen:
- WO-A2-2005/066431

## Beschreibung

Die Erfindung, betrifft ein Laminatbodenpaneel nach dem Oberbegriff des Anspruchs 1.

Laminatbodenpaneelen, die häufig als Parkettersatz eingesetzt werden sind aus dem Stand der Technik bereits seit langem bekannt. Die bekannten Laminatbodenpaneelen sind derart aufgebaut, daß sie als Trägermaterial üblicherweise eine HDF- oder MDF-Platte aufweisen. Als Trägermaterial kommen aber grundsätzlich auch andere Materialien in Frage. Auf der Unterseite ist üblicherweise ein sogenannter Gegenzug aufgebracht, um den Effekt der Schlüsselung, d.h. das Verbiegen des fertigen Werkstoffes, zu verhindern. Die obere Schicht eines Laminatbodenpaneels besteht üblicherweise aus einem harzgetränkten Dekorpapier und einem Overlay. Zur Herstellung des bekannten Laminatbodenpaneels werden die einzelnen harzgetränkten Papiere in der Regel unter Druck und Temperatur miteinander verpreßt. Dies erfolgt üblicherweise mittels einer sogenannten KT-Presse. Als Harze werden Melamin- und/oder Phenol-Harze verwendet. Das Overlay weist in der Regel entweder eine Korundschicht auf oder aber es sind Korundanteile vorgesehen, um die Verschleißfestigkeit zu erhöhen.

Nachteile, die sich bei bekannten Laminatböden ergeben, bestehen zum einen darin, daß sich aufgrund der harten oberen Schicht häufig nach dem Schneiden einer verpreßten Laminatplatte zu einzelnen Laminatbodenpaneelen randseitig eine sogenannter "Weißbruch" ergibt. Hierbei handelt um kleine Abplatzungen an den geschnittenen Rändern mit der Folge, daß die Schnittkanten von nebeneinander verlegten Paneelen relativ unsauber aussehen, so daß sich eine optische Beeinträchtigung des Laminatbodens ergibt. Darüber hinaus ist es bei bekannten verlegten Laminatböden so, daß diese relativ trittschallanfällig sind. Zur Verringerung des Trittschalls werden üblicherweise Trittschalldämmschichten unterhalb des Laminatbodens angeordnet, was mit zusätzlichem Aufwand und Kosten verbunden ist.

Aus der WO 2005/066431 A2 geht bereits ein gattungsgemäßes Laminatbodenpaneel hervor, das eine Trägerplatte und eine Nutzschicht mit abriebfesten Partikeln zum Schutz vor Verschleiß aufweist. Die Oberfläche der Nutzschicht ist mit einem Relief versehen. Dabei weist die Nutzschicht ein Dekorpapier oder eine elastische Dekorfolie auf, auf dem sich eine dekorative Abbildung befindet. Um den Herstellungsprozess zu vereinfachen, ist vorgesehen, dass die dekorative Abbildung mit einer transparenten Lackschicht überzogen ist, wobei die Vertiefungen des Reliefs durch eine mit dem Lack reagierende Chemikalie erzeugt wird. Im Übrigen befinden sich die abriebfesten Partikel in der Lackschicht. Die Herstellung des bekannten Paneels ist vergleichsweise aufwendig. Im Übrigen ergeben sich zumindest teilweise die vorgenannten Probleme und Nachteile des Standes der Technik.

Aufgabe der vorliegenden Erfindung ist es nun, hier Abhilfe zu schaffen und die Nachteile des Standes der Technik zu vermeiden,

Zur Lösung der vorgenannten Aufgabe ist bei einem Laminatbodenpaneel der eingangs genannten Art erfindungsgemäß vorgesehen, daß die obere Schicht an ihrer außenseitigen Oberfläche eine Folienschicht aus einem elastischen Kunststoff aufweist. Durch die erfindungsgemäße Ausgestaltung ergeben sich eine Vielzahl von wesentlichen Vorteilen. Durch die elastische Außenseite der oberseitigen Schicht ergibt sich nicht nur ein für den Benutzer angenehmes und im Vergleich zu bekannten Laminatböden anderes Laufgefühl, es ergibt sich im übrigen in Abhängigkeit der Ausbildung der außenseitigen Folienschicht eine zum Teil deutliche Trittschalkeduzierung mit der Folge, daß zum Teil sogar unterseitige Trittschalldämmatten entfallen oder aber zumindest von ihrer Dicke her erheblich reduziert werden können. Durch die Elastizität der Oberfläche verbessern sich auch die Eigenschaften bzgl, Druck- und Stoßbeanspruchung der Produkte, Beim bekannten Laminatboden entstehen bei einer entsprechenden Belastung Risse im Overlay, so daß Feuchtigkeit und/oder Absplitterungen das Laminat in der Nutzung einschränken. Auf Grund der Elastizität der erfindungsgemäßen Schicht ergeben sich die vorgenannten Probleme vorliegend nicht. Darüber hinaus ist bei der Herstellung des erfindungsgemäßen Paneels ein scharfer Kantenschnitt möglich, ohne daß sich der eingangs erwähnte Weißbruch ergibt. Es ist festgestellt worden, daß sich bei Einsatz der elastischen oberen Kunststoffschicht Abplatzungen an den Rändern vermeiden lassen. Als Folge hiervon ergeben sich erfindungsgemäße Laminatböden, bei denen die Kanten an den einzelnen Paneelen nicht beeinträchtigt sind, so daß der optisch-ästhetische Eindruck des Paneelbodens durchgängig gut ist. Im übrigen ist festgestellt worden, daß sich durch die oberseitige Folienschicht aus elastischem Kunststoff auch verbesserte Schnitteigenschaften des Paneels insgesamt ergeben, was im genschaften des Paneels insgesamt ergeben, was im Ergebnis zu einer erhöhten Werkzeugstandzeit des Schneidwerkzeugs führt.

Das Bewußtsein der Menschen für gesundes Wohnen und Wohnbehaglichkeit wächst stetig. Hartböden, wie zum Beispiel Marmor und auch Laminatböden mit Overlaybeschichtung, werden als "fußkalt" bezeichnet, während Echtholzböden dagegen als "fußwarm" bezeichnet werden. Dieser Unterschied ist nicht nur durch das Empfinden einer Person, die einen derartigen Boden betritt, spürbar, die unterschiedliche Wärmeableitung an Fußböden ist auch meßbar, beispielsweise über eine Wärmebildkamera. Durch die Elastizität der Oberfläche und Verwendung der elastischen Folienschicht wird bei dem erfindungsgemäßen Laminatbodenpaneel eine angenehme Fußwärme erzielt.

Ein weiterer wesentlicher Vorteil der Erfindung, der mit der Verwendung der oberseitigen Folienschicht aus elastischem Kunststoff einhergeht, besteht darin, daß sich beim verlegten Laminatboden eine elastische Kantenpreßpassung zwischen benachbarten Bodenpaneelen ergibt. Letztlich wirken die seitlichen Ränder der elastischen Folienschicht, die bei verlegten benachbarten Paneelelementen gegeneinanderdrücken, in Art einer Dichtung, so daß sich dadurch eine zusätzliche Sicherheit vor Feuchtigkeit ergibt.

Schließlich bietet die elastische obere Folienschicht die Möglichkeit, in die Oberfläche, die aufgrund der Kunststoffausbildung in einfacher Weise auch plastisch verformbar ist, beliebige Strukturen einzubringen, um dadurch den Laminatcharakter des erfindungsgemäßen Paneels noch weiter zu verbessern.

Letztlich ergibt sich durch die erfindungsgemäße Ausgestaltung ein Laminatboden mit den zusätzlichen positiven Eigenschaften eines elastischen Bodens.

Grundsätzlich ist es bei der vorliegenden Erfindung möglich, daß auf ein aus dem Stand der Technik bekanntes Laminatbodenpaneel oberseitig eine Folienschicht aus einem elastischen Kunststoff bzw. eine entsprechende Kunststoffbeschichtung aufgebracht wird. Im Zusammenhang mit dem Zustandekommen der vorliegenden Erfindung ist festgestellt worden, daß es ohne weiteres möglich ist, die obere Schicht unter Verzicht eines Overlays herzustellen. Dabei bezeichnet Overlay die beim Stand der Technik vorgesehene oberste Schicht des Laminats, die üblicherweise als abriebfeste Melaminharzbeschichtung ausgebildet ist. Im Zusammenhang mit der Erfindung hat sich gezeigt, daß sich durch Einsatz eines elastischen Kunststoffes eine hohe Verschleißbeständigkeit ergibt, die den üblichen Gebrauchs- und Tauglichkeitsanforderungen von Oberflächen bei Böden nach den eingängigen DIN/EN-Vorschriften entspricht.

Im Zusammenhang mit der vorliegenden Erfindung ist im übrigen festgestellt worden, daß es besondere Vorteile bietet, die obere Schicht aus einer Mehrzahl von übereinander angeordneten Folienschichten auszubilden. Dabei bezeichnet eine Mehrzahl von Folienschichten zwei oder mehr Folien. Durch einen Sandwich-Aufbau der oberen Schicht mit einer Mehrzahl von Folien ist eine Leistungseinstellung der Oberfläche je nach Einsatzweck ohne weiteres möglich. Gleiches gilt im übrigen auch dann, wenn nur eine einzige Schicht vorgesehen ist, jedoch unterschiedliche Kunststoffe mit unterschiedlichen Produkteigenschaften für die Folienschicht eingesetzt werden.

Bei mehreren übereinander angeordneten Folienschichten sollten wenigstens zwei Folienschichten unterschiedliche Eigenschaften aufweisen. Dabei sollte die oberste Folienschicht gegenüber der darunter angeordneten Folienschicht eine höhere Elastizität und/oder eine geringere Härte als die darunter angeordnete Folienschicht aufweisen. Durch die höhere Elastizität der oberen Schicht ergibt sich eine verbesserte Kratzbeständigkeit, während die untere Schicht eine größere Härte hat, was sich günstig auf die Abriebfestigkeit der oberen Schicht auswirkt.

Zur Erzielung der vorgenannten positiven Eigenschaften der außenseitigen Folienschicht sowie der gegebenenfalls vorgesehenen weiteren Folienschichten hat es sich gezeigt, daß bevorzugt ein thermoplastischer und/oder elastomerer Kunststoff für die Folienschicht(en) zum Einsatz kommen sollten. Bevorzugt ist hier der Einsatz von Polypropylen (PP), Polyethylen (PE), Polyurethan (PUR) und/oder Polyvinylchlorid (PVC). Darüber hinaus können auch Mischungen einzelner oder mehrerer der vorgenannten Kunststoffe zum Einsatz kommen. PE zeichnet sich dadurch aus, daß es weichelastisch, zäh, fest und biegsam ist und eine gute Reißdehnung aufweist. PP hat ähnliche Eigenschaften wie PE, aber weist eine höhere Steifigkeit, Festigkeit und Temperaturbeständigkeit auf. PVC zeichnet sich dadurch aus, daß es abriebfest sowie säure-, laugen- und lösungsmittelbeständig ist. Dabei ist Hart-PVC schlagfest, während Weich-PVC gummiartig und schmiegsam ist. Schließlich zeichnet sich PUR dadurch aus, daß es abriebfest und zähfest sowie säure-, laugen- und temperaturbeständig ist.

Im übrigen sollte die Folienstärke einer Folienschicht zwischen 20 µm und 1500 um liegen. Dabei wird darauf hingewiesen, daß jeder Einzelwert im vorgenannten Intervall, also 21 µm, 22 µm ... 1498 µm, 1499 µm, möglich ist, ohne daß es einer Einzelnennung bedarf Für die meisten Anwendungsfälle liegt die Dicke der Folie zwischen 50 µm und 500 µm. Letztlich ist die Stärke der Folie abhängig vom jeweiligen Einsatzzweck. Soll beispielsweise eine hohe Trittschalldämmung und insbesondere eine vergleichsweise tiefe Struktur in die Oberfläche eines erfindungsgemäßen Paneels eingebracht werden, ist eine entsprechend dicke Folienschicht zweckmäßig.

Je nach Anwendungsfall und gewünschtem Design sollte die oberste Folienschicht transparent (oder zumindest im wesentlichen transparent) oder aber ein- bzw. durchgefärbt sein. Bei einer transparenten Folie ist es so, daß die Transparenz der Folie eine deutlich bessere optische Produktqualität ermöglicht als beim Stand der Technik, insbesondere wenn auf eingelagerte Korundpartikel, die beim Stand der Technik im Overlay üblicherweise eingesetzt werden, verzichtet wird. Der Verzicht auf eingelagerte Korundpartikel ist bei der Erfindung ohne weiteres möglich, da die erfindungsgemäße Folienschicht auch ohne Korundpartikel hinreichend verschleißbeständig ist. Im übrigen kann, wie zuvor erwähnt, statt einer transparenten Folienschicht auch eine ein- bzw. durchgefärbte Folie unter Verwendung einer oder mehrerer Farben verwendet werden. Hierdurch sind entsprechend der Färbung der Folie zusätzliche Designs realisierbar.

Zur Beeinflussung der optischen und/oder technischen Eigenschaften der Folienschicht kann es sich für bestimmte Anwendungsfälle anbieten, in, auf und/oder unter der Folienschicht bestimmte Partikel vorzusehen. Diese Partikel können aus Diamant, Korund, Glas, Stein, Marmor, Kupfer, Gold, weiteren Kunststoffen, Papier, Aluminium usw. sowie beliebigen Mischungen aus den vorgenannten Partikeln bestehen. Die vorgenannten Partikel können von einer Nano-Korngröße bis zur flächigen Form im Millimeterbereich unterschiedlich groß sein. Im übrigen können die vorgenannten Partikel auch sandwichartig zwischen zwei Kunststofffolienschichten angeordnet werden.

Im Zusammenhang mit dem Einsatz einer oberseitigen transparenten Folienschicht bieten sich im übrigen verschiedene mögliche bevorzugte Ausführungsformen an. Zum einen ist es möglich, daß sich das Dekorpapier zwischen der Trägerplatte und der obersten Folienschicht befindet. Aufgrund der Transparenz zumindest der obersten Folienschicht ist das Dekor dabei im verpreßten Zustand gut erkennbar. Alternativ ist es auch möglich, das Dekorpapier sandwichartig zwischen zwei Folienschichten anzuordnen. Dabei können die beiden Folienschichten vom Material (und damit von den Eigenschaften) und/oder der Dicke her unterschiedlich sein. Im übrigen kann der vorgenannte Schichtenverbund auch als Vorprodukt in Form eines fest miteinander verbundenen Schichtenverbundes ausgebildet sein. Des weiteren ist es sogar möglich, bei der vorliegenden Erfindung vollständig auf ein Dekorpapier zu verzichten. Es ist festgestellt worden, daß sich die vorgenannten Kunststoffe - jedenfalls teilweise - ausgesprochen gut bedrucken lassen. Gerade eine Bedruckung im Digitaldruck ist mit einer ausgesprochen hohen Auflösung möglich, da bei der erfindungsgemäß vorgesehenen Folienschicht der sich bei Dekorpapier üblicherweise ergebende Löschblatteffekt nicht auftritt. Dies führt im übrigen auch zu einem geringeren Farbverbrauch als beim Bedrucken von üblichen Dekorpapieren.

Bei einer konstruktiv sehr einfachen erfindungsgemäßen Ausführungsform ist es möglich, daß die obere Schicht des erfindungsgemäßen Paneels lediglich eine Folienschicht aufweist, die dann unterseitig bedruckt ist. In diesem Falle versteht es sich, daß das verwendete Kunststoffmaterial einerseits bedruckbar sein und andererseits eine hinreichende Elastizität und Verschleißbeständigkeit aufweisen muß. Bei einem Schichtenaufbau mit zwei Folienschichten ist es möglich, die Unterseite der obersten Folienschicht und/oder die Oberseite der unteren Folienschicht zu bedrucken. In allen drei Fällen ist das gedruckte Dekorbild sandwichartig zwischen den beiden Folienschichten aufgenommen. Im übrigen ist es natürlich grundsätzlich auch möglich, ein bedrucktes Dekorpapier zu verwenden und darüber hinaus eine Bedruckung an der Unterseite der obersten Folienschicht vorzusehen, um besondere Dekoreffekte zu erzielen.

Zur Verbindung der einzelnen Schichten mit der Trägerplatte bietet es sich an, daß die Folienschicht mit dem Dekorpapier und/oder der Trägerplatte und im übrigen, bei einer Mehrzahl von Folienschichten diese untereinander verklebt und/oder miteinander heißverpreßt sind, bevorzugt über eine KT-Preßeinrichtung. Allerdings versteht es sich, daß statt der KT-Beschichtungstechnik grundsätzlich auch ein anderes Beschichtungsverfahren zum Einsatz kommen kann, beispielsweise das Kaschierverfahren.

Von besonderem Vorteil ist es in diesem Zusammenhang, daß die obere Schicht unterseitig eine PUR-Folienschicht als Haftvermittler zur Trägerplatte ausweist. PUR zeichnet sich dadurch aus, daß dieses Material einen niedrigen Schmelzpunkt hat, so daß dieser Kunststoff beim Heißverpressen aufschmilzt und damit als Klebschicht/Haftvermittler zwischen den weiteren Schichten der Oberschicht und der Trägerplatte dient.

Bei der Nutzung eines Bodens mit erfindungsgemäßen Laminatbodenpaneelen lassen sich Gebrauehsspuren aller Art, wie Kratzer oder Abnutzungserscheinungen, nicht vermeiden. Zur Beseitigung dieser Gebrauchsspuren ist dem erfindungsgemäßen Laminatbodenpaneel ein Klarlack zugeordnet, durch den derartige Gebrauchsspuren beseitigt werden können. Außerdem ist eine zusätzliche Oberflächenversiegelung möglich. In beiden Fällen kann eine mechanische und/oder chemische Vorbehandlung der obersten Folienschicht erfolgen und anschließend wird der Klarlack aufgetragen. Hierbei gibt sich dann eine nahezu vollständige Renovierung der Oberfläche von Gebrauchsspuren. Eine derartige Wiederherstellung der Oberfläche ist bei einem Laminatboden mit Overlaybeschichtung nicht möglich.

Bei dem Klarlack handelt es sich bevorzugt um eine transparente, hoch strapazierfähige und/oder geruchsarme Beschichtung auf Basis eines thermoplastischen und/oder elastomeren Kunststoffes, insbesondere auf Basis von PP- und/oder PE- und/oder PLTR- und/oder PVC. Bevorzugt ist ein wasserverdünnbarer PUR-Klarlack. Dieser kann eine Polyurethandispersion, Kieselsäure, Wasser, Glycolether, heterozyklische Kethone und/oder Additive aufweisen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Ansicht eines Schichtaufbaus eines bekannten Laminatbodenpaneels (Stand der Technik),
- Fig. 2: eine schematische Darstellung des Schichtenaufbaus einer ersten Ausführungsform eines erfindungsgemäßen Laminatbodenpaneels,
- Fig. 3: eine schematische Darstellung des Schichtenaufbaus einer zweiten Ausführungsform eines erfindungsgemäßen Laminatbodenpaneels,
- Fig. 4: eine schematische Darstellung des Schichtenaufbaus einer dritten Ausführungsform eines erfindungsgemäßen Laminatbodenpaneels,
- Fig. 5: eine schematische Darstellung des Schichtenaufbaus einer vierten Ausführungsform eines erfindungsgemäßen Laminatbodenpaneels,
- Fig. 6: eine schematische Darstellung des Schichtenaufbaus einer fünften Ausführungsform eines erfindungsgemäßen Laminatbodenpaneels,
- Fig. 7: eine schematische Darstellung des Schichtenaufbaus einer sechsten Ausführungsform eines erfindungsgemäßen Laminatbodenpaneels,
- Fig. 8: eine schematische Darstellung des Schichtenaufbaus einer siebten Ausführungsform eines erfindungsgemäßen Laminatbodenpaneels und
- Fig. 9: eine schematische Darstellung des Schichtenaufbaus einer achten Ausführungsform eines erfindungsgemäßen Laminatbodenpaneels.

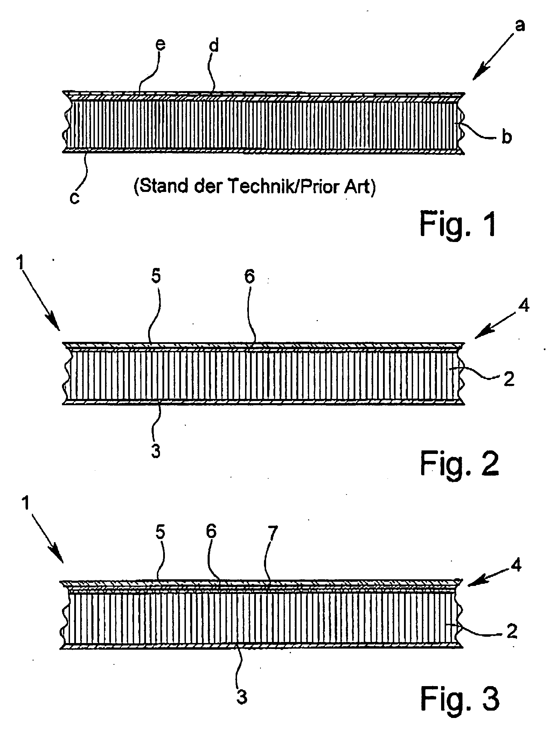

In Fig. 1 ist schematisch der Schichtaufbau eines zum Stand der Technik zählenden Laminatbodenpaneels a dargestellt. Das Laminatbodenpaneel a weist eine Trägerplatte b (aus HDF oder MDF oder einem anderen Material) auf. Unterseitig befindet sich ein Gegenzug c. Bei dem Gegenzug c handelt es sich um eine Schicht, die zur Formstabilität des Paneels a beiträgt. Oberhalb der Trägerplatte b befindet sich eine Dekorschicht d aus Dekorpapier und ein Overlay e. Die Dekorschicht d ist eine mit einem bestimmten Dekor bedruckte Papierschicht, während das Overlay e die oberste Schicht des Laminatbodenpaneels a und damit die Lauf- oder Nutzschicht darstellt. Das Overlay e besteht in der Regel aus Melaminharz, das dem Paneel a seine hohe Strapazierfähigkeit verleiht.

In den Fig. 2 bis 9 sind jeweils unterschiedliche Ausführungsformen von erfindungsgemäßen Laminatbodenpaneelen 1 dargestellt. Bei allen Ausführungsformen ist es so, daß, wie beim Stand der Technik auch, eine Trägerplatte 2 vorgesehen ist. Die Trägerplatte 2 besteht bevorzugt aus HDF oder MDF oder einem anderen Material. Bevorzugt handelt es sich um Holzwerkstoffe. Die Dicke der Trägerplatte 2 beträgt dabei wenigstens 5 mm. Größere Dicken sind ohne weiteres möglich. Nicht dargestellt ist, daß das Laminatbodenpaneel 1 im Bereich der Trägerplatte randseitig profiliert ist, um über die Profilierung mit benachbarten Laminatbodenpaneelen form- und/oder reibschlüssig verbunden zu werden. Letztlich handelt es sich hierbei beispielsweise um sogenannte Click-Verbindungs-Profile, die in Art eines Nut-Feder-Systems funktionieren. Im übrigen weist die Trägerplatte 2 und damit auch das Laminat-Bodenpaneel 1 von der Fläche her die Form eines langgstreckten Rechtecks auf. Die Abmaße dabei sind grundsätzlich beliebig.

Bei allen dargestellten Ausführungsformen ist im übrigen an der Unterseite der Trägerplatte 2 ein Gegenzug 3 vorgesehen. Beim Gegenzug 3 handelt es sich um eine Formstabilitätsschicht. Es wird ausdrücklich darauf hingewiesen, daß die Realisierung des Gegenzugs 3 grundsätzlich zweckmäßig und in der Praxis die Regel ist, daß der Gegenzug 3 jedoch nicht notwendigerweise vorgesehen sein muß. Es kann daher bei allen dargestellten Ausführungsformen und der im Anspruch 1 angegebenen grundsätzlich auch auf den Gegenzug 3 verzichtet werden.

Neben der Trägerplatte 2 und dem etwaig vorhandenen Gegenzug 3 weist das Laminatbodenpaneel 1 oberhalb der Trägerplatte 2 im übrigen eine auf die Trägerplatte 2 aufgebrachte ein- oder mehrlagige obere Schicht 4 auf.

Bei allen erfindungsgemäßen Ausführungsformen ist es nun so, daß die obere Schicht an ihrer außenseitigen Oberseite, d.h. an der der Trägerplatte 2 abgewandten Seite, eine oberste Folienschicht 5 aus einem elastischen Kunststoff aufweist.

Im übrigen ist es bei allen Ausführungsformen so, daß die obere Schicht 4 insgesamt unter Verzicht eines außenseitigen Overlays, wie dies beim Stand der Technik vorgesehen ist, hergestellt ist. Des weiteren ist es bei allen Ausführungsformen auch so, daß die oberste Folienschicht 5 auf Basis eines thermoplastischen und/oder elastomeren Kunststoffs, insbesondere PP, PE, PUR und/oder PVC hergestellt ist. Die Wahl und die Ausbildung des jeweiligen Kunststoffes ist von den gewünschten Anforderungen des Laminatbodens abhängig, Gleiches gilt für die Dicke der Folienschicht, die zwischen 20 µm und 1500 µm liegen und jeden beliebigen Wert zwischen den vorgenannten Bereichsgrenzen haben kann, auch wenn dies im einzelnen nicht angegeben ist.

Weiterhin ist es bei allen dargestellten Ausführungsformen so, daß die oberste Folienschicht 5 transparent ist. Hiermit ist eine zumindest im wesentlichen klare Durchsichtigkeit bzw. hohe Lichtdurchlässigkeit gemeint. Nicht dargestellt ist, daß die oberste Folienschicht auch ein- bzw. durchgefärbt sein kann. In diesem Falle ist weder eine Bedruckung noch eine Dekorschicht erforderlich. Der Schichtaufbau kann dann im einfachsten Fall entweder nur zweischichtig, nämlich mit Trägerplatte und durchgefärbter Folienschicht, oder gegebenenfalls dreischichtig sein, wenn ergänzend ein Gegenzug vorgesehen ist.

Bei der in Fig. 2 dargestellten Ausführungsform ist es nun so, daß sich oberhalb der Trägerplatte 2 eine Folienschicht 5 befindet, die unterseitig eine Bedruckung 6 mit einem Dekor aufweist. Die Bedruckung 6 ist unmittelbar auf die Unterseite der Folienschicht 5 aufgebracht. Eine Dekorschicht mit einem Dekorpapier ist nicht vorgesehen. Der feste Verbund der einzelnen Schichten wird durch einen Beschichtungs- bzw. Preßvorgang mittels einer KT-Preßeinrichtung hergestellt.

Die Ausführungsform gemäß Fig. 3 unterscheidet sich von der gemäß Fig. 2 darin, daß sich unterhalb der Bedruckung 6 und damit letztlich als Haftvermittler zwischen der Folienschicht 5 und der Trägerplatte 2 eine Klebschicht 7 befindet. Der feste Verbund der einzelnen Schichten kann dabei ausschließlich über die Klebschicht 7 erfolgen. Ergänzend kann aber auch eine KT-Verpressung erfolgt sein.

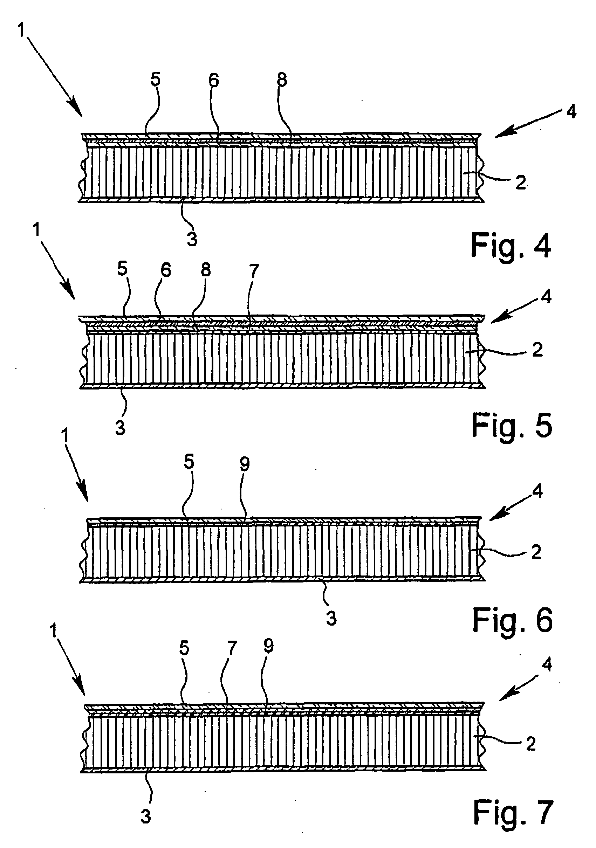

Bei der Ausführungsform gemäß Fig. 4 ist es so, daß die obere Schicht 4 als äußerste Schicht die Folienschicht 5 ausweist. Des weiteren ist an die Trägerplatte 2 angrenzend eine weitere Folienschicht 8 vorgesehen. Zwischen den beiden Folienschichten 5, 8 befindet sich die Bedruckung 6. Die Bedruckung 6 kann dabei auf der Oberseite der Folienschicht 8 und/oder der Unterseite der Folienschicht 5 vorgesehen sein. Wenngleich dies nicht notwendigerweise der Fall sein muß, kann die Folienschicht 8 aus PUR bestehen oder auf Basis von PUR hergestellt sein und als Haftvermittler dienen. Dies gilt insbesondere auch dann, wenn der betreffende Kunststoff einen niedrigen Schmelzpunkt hat und beim Heißverpressen letztlich in Art einer Klebschicht wirkt.

Hinzuweisen ist im Zusammenhang mit Fig. 4 darauf, daß es grundsätzlich auch möglich ist, daß die obere Schicht 4 zwei oder auch mehrere Folienschichten aufweist, die unmittelbar übereinander angeordnet sind, ohne daß eine Bedru kung zwischen diesen Schichten vorgesehen ist. So kann beispielsweise die oberste Schicht eine besondere Elastizität aufweisen, die die Kratzbeständigkeit des Laminatbodenpaneels 1 fördert, wobei eine zweite Schicht als harte Schicht ausgebildet sein kann, die besondere Eigenschaften der Abriebfestigkeit hat. Erst an diesen Folienschichtverbund kann sich eine Bedruckung 6 oder aber ein Dekorpapier und gegebenenfalls weitere Folienschichten anschließen.

Die Ausführungsform gemäß Fig. 5 unterscheidet sich von der gemäß Fig. 4 nur dadurch, daß unterhalb der Folienschicht 8 eine Klebschicht 7 vorgesehen ist, um einen sicheren Verbund durch Verklebung und/oder Heißverpressung beispielsweise über eine KT-Presse herzustellen.

In Fig. 6 ist eine Ausführungsform dargestellt, bei der sich unterhalb der obersten Folienschicht 5 eine mit einem bestimmten Dekor bedruckte Dekorpapierschicht 9 mit einem Dekor befindet. Das Dekorpapier kann dabei beharzt sein. Der Gesamtverbund wird durch eine Heißverpressung beispielsweise mittels einer KT-Presse hergestellt. Allerdings ist es auch möglich, ein unbeharztes Dekorpapier zu verwenden, wenn ein entsprechender Kunststoff der Folienschicht 5 verwendet wird, der nicht nur für eine Verbindung zwischen dem Dekorpapier und der Folienschicht 5 sorgt, sondern auch für eine feste Verbindung zur Trägerplatte 2. Bezüglich des Dekors der Dekorpapierschicht 9 oder Bedruckung 6 ist darauf hinzuweisen, daß es sich hierbei bevorzugt um ein (Holz-)Masernungsdesign handelt. Allerdings sind beliebige andere Muster, Gestaltungen, Bilder und Designs möglich.

Die Ausführungsform gemäß Fig. 7 unterscheidet sich von der gemäß Fig. 6 nur dadurch, daß zwischen der Folienschicht 5 und der Dekorpapierschicht 9 eine Klebschicht 7 vorgesehen ist.

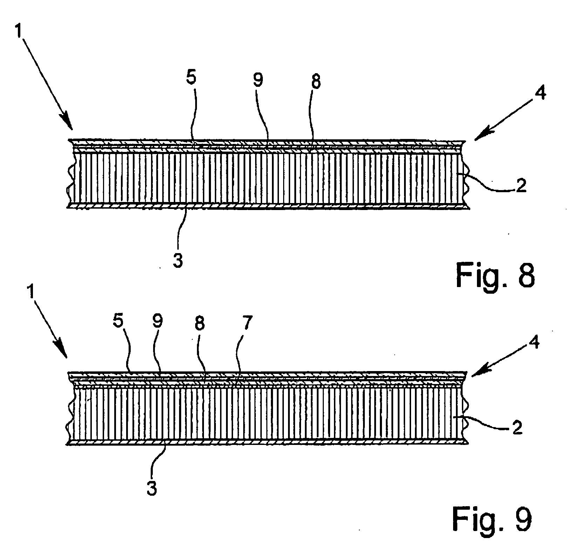

Bei der Ausführungsform gemäß Fig. 8 ist die Dekorpapierschicht 9 zwischen der äußeren Folienschicht 5 und der unteren Folienschicht 8 sandwichartig aufgenommen.

Demgegenüber ist es bei der Ausführungsform gemäß Fig. 9 so, daß sich zwischen dem Schichtenverbund gemäß Fig. 8 und der Trägerplatte 2 noch eine Klebschicht 2 befindet.

Ausdrücklich hinzuweisen ist darauf, daß sich jede der vorgenannten Folienschichten 5, 8 aus einem Schichtenverbund mit zwei oder mehreren Schichten zusammensetzen kann. Dabei bestehen die einzelnen Schichten des Schichtenverbundes bevorzugt aus unterschiedlichen Kunststoffen mit unterschiedlichen Eigenschaften und haben dabei entweder die gleiche oder unterschiedliche Schichtdicken.

### Bezugszeichenliste

- a: Laminatbodenpaneel
- b: Trägerplatte
- c: Gegenzug
- d: Dekorschicht
- e: Overlay

- 1: Laminatbodenpaneel
- 2: Trägerplatte
- 3: Gegenzug
- 4: obere Schicht
- 5: Folienschicht
- 6: Bedruckung
- 7: Klebschicht
- 8: Folienschicht
- 9: Dekorpapierschicht

## Patentansprüche

1. Laminatbodenpaneel (1) mit einer Trägerplatte (2), einem unterseitigen Gegenzug (3) und einer auf die Trägerplatte (2) aufgebrachten ein- oder mehrlagigen oberen Schicht (4), wobei die obere Schicht (4) wenigstens eine Folienschicht aus einem elastischen Kunststoff aufweist,
**dadurch gekennzeichnet,**
**daß** an der außenseitigen Oberseite der oberen Schicht (4) eine Folienschicht (5) aus einem elastischen Kunststoff vorgesehen ist.

2. Laminatbodenpaneel nach Anspruch 1, **dadurch gekennzeichnet, daß** die obere Schicht (4) unter Verzicht eines Overlays, insbesondere aus Melaminharz, hergestellt ist.

3. Laminatbodenpaneel nach Anspruch 1 oder 2, **dadurch gekennzeichnet, daß** die obere Schicht (4) eine Mehrzahl von übereinander angeordneten Folienschichten (5, 8) aufweist.

4. Laminatbodenpaneel nach einem der vorhergehenden Ansprüche, **dadurch gekennzeichnet, daß** bei mehreren übereinander angeordneten Folienschichten (5, 8) wenigstens zwei Folienschichten unterschiedliche Eigenschaften aufweisen.

5. Laminatbodenpaneel nach einem der vorhergehenden Ansprüche, **dadurch gekennzeichnet, daß** die oberste Folienschicht (5) eine höhere Elastizität und/oder eine geringere Härte als die darunter angeordnete Folienschicht aufweist.

6. Laminatbodenpaneel nach einem der vorhergehenden Ansprüche, **dadurch gekennzeichnet, daß** die Folienschicht (5, 8) auf Basis eines thermoplastischen und/oder elastomeren Kunststoffes, insbesondere PP und/oder PE und/oder PUR und/oder PVC hergestellt ist.

7. Laminatbodenpaneel nach einem der vorhergehenden Ansprüche, **dadurch gekennzeichnet, daß** die Folienschicht (5, 8) eine Folienstärke zwischen 20 µm und 1500 µm, insbesondere zwischen 30 µm und 1000 µm und bevorzugt zwischen 50 µm und 500 µm aufweist.

8. Laminatbodenpaneel nach einem der vorhergehenden Ansprüche, **dadurch gekennzeichnet, daß** die oberste Folienschicht (5) transparent oder ein- oder durchgefärbt ist.

9. Laminatbodenpaneel nach einem der vorhergehenden Ansprüche, **dadurch gekennzeichnet, daß** in, auf und/oder unter der Folienschicht (5, 8) wenigstens ein die technischen und/oder optischen Eigenschaften der Folienschicht (5, 8) veränderndes Material vorgesehen ist.

10. Laminatbodenpaneel nach einem der vorhergehenden Ansprüche, **dadurch gekennzeichnet, daß** zwischen der obersten Folienschicht (5) und einer unterhalb der obersten Folienschicht (5) befindlichen Folienschicht (8) eine Bedruckung (6) und/oder eine Dekorpapierschicht (9) mit einem Dekor vorgesehen ist.

11. Laminatbodenpaneel nach einem der vorhergehenden Ansprüche, **dadurch gekennzeichnet, daß** die Folienschicht (5, 8) mit der Dekorpapierschicht (9) und/oder der Trägerplatte (2) verklebt und/oder heißverpreßt ist.

12. Laminatbodenpaneel nach einem der vorhergehenden Ansprüche, **dadurch gekennzeichnet, daß** die obere Schicht (4) unterseitig eine PUR-Folienschicht als Haftvermittler zur Trägerplatte (2) aufweist.

13. Laminatbodenpaneel nach einem der vorhergehenden Ansprüche, **dadurch gekennzeichnet, daß** zur nachträglichen Oberflächenversiegelung und/oder zur Beseitigung von Gebrauchsspuren, wie Abnutzungserscheinungen, Kratzern oder dergleichen, ein auf die oberste Folienschicht aufbringbarer Klarlack, insbesondere in Form einer Dispersion, vorgesehen ist.

14. Laminatbodenpaneel nach Anspruch 13, **dadurch gekennzeichnet, daß** der Klarlack wasserverdünnbar und auf Basis eines thermoplastischen und/oder elastomeren Kunststoffes, insbesondere PP und/oder PE und/oder PUR und/oder PVC hergestellt ist.

## Claims

1. A laminate floor panel (1), comprising a supporting board (2), an underside backing board (3) and a top layer (4) consisting of one or several layers, applied to the supporting board (2), wherein the top layer (4) has at least one film layer of resilient plastic,
**characterized in that**
a film layer (5) of resilient plastic is provided on the outside upper face of the top layer (4).

2. The laminate floor panel according to claim 1, **characterized in that** the top layer (4) is made without using an overlay, in particular made of melamine resin.

3. The laminate floor panel according to claim 1 or 2, **characterized in that** the top layer (4) has a plurality of film layers (5, 8) arranged one above the other.

4. The laminate floor panel according to any of the preceding claims, **characterized in that** with several film layers (5, 8) arranged one above the other, at least two film layers have different properties,

5. The laminate floor panel according to any of the preceding claims, **characterized in that** the uppermost film layer (5) has greater resilience and/or lower hardness than the film layer arranged thereunder.

6. The laminate floor panel according to any of the preceding claims, **characterized in that** the film layer (5, 8) is produced based on a thermoplastic and/or elastomeric plastic, in particular on PP and/or PE and/or PUR and/or PVC.

7. The laminate floor panel according to any of the preceding claims, **characterized in that** the film layer (5, 8) has a film thickness between 20 µm and 1500 µm, in particular between 30 µm and 1000 µm, and preferably between 50 µm and 500 µm.

8. The laminate floor panel according to any of the preceding claims, **characterized in that** the uppermost film layer (5) is transparent or dyed or imbued.

9. The laminate floor panel according to any of the preceding claims, **characterized in that** in, on, and/or under the film layer (5, 8) at least one material altering the technical and/or optical properties of the film layer (5, 8) is provided.

10. The laminate floor panel according to any of the preceding claims, **characterized in that** between the uppermost film layer (5) and a film layer (8) located under the uppermost film layer (5), a print (6) and/or a decorative paper layer (9) having a decorative design is/are provided.

11. The laminate floor panel according to any of the preceding claims, **characterized in that** the film layer (5, 8) is glued and/or hot-pressed with the decorative paper layer (9) and/or with the supporting board (2).

12. The laminate floor panel according to any of the preceding claims, **characterized in that** the top layer (4) has on the underside a PUR film layer as an adhesion promoter for the supporting board (2).

13. The laminate floor panel according to any of the preceding claims, **characterized in that** for subsequent surface sealing and/or for eliminating signs of usage, such as wear marks, scratches, or the like, a transparent lacquer, in particular as a dispersion applicable to the uppermost film, layer is provided.

14. The laminate floor panel according to claim 13, **characterized in that** the transparent lacquer is water-dilutable and produced on the basis of thermoplastic and/or elastomeric plastic, in particular of PP and/or PE and/or PUR and/or PVC.

## Revendications

1. Panneau de sol stratifié (1), comprenant une plaque de support (2), un contre-balancement côté inférieur (3) et une couche supérieure (4) en une ou plusieurs épaisseurs, appliquée à la plaque de support (2), dans lequel la couche supérieure (4) présente au moins une couche en feuille en matière plastique élastique,
**caractérisé en ce qu'**une
couche en feuille (5) en matière plastique élastique est prévue sur la face supérieure côté extérieur de la couche supérieure (4),

2. Panneau de sol stratifié selon la revendication 1, **caractérisé en ce que** la couche supérieure (4) est produite en renonçant à un overlay, en particulier en résine de mélamine.

3. Panneau de sol stratifié selon la revendication 1 ou 2, **caractérisé en ce que** la couche supérieure (4) présente une pluralité de couches en feuille (5, 8) disposées les unes au-dessus des autres.

4. Panneau de sol stratifié selon l'une quelconque des revendications précédentes, **caractérisé en ce que** dans le cas de plusieurs couches en feuille (5, 8) disposées les unes au-dessus des autres, au moins deux couches en feuille présentent des propriétés différentes.

5. Panneau de sol stratifié selon l'une quelconque des revendications précédentes, **caractérisé en ce que** la couche en feuille (5) de dessus présente une élasticité supérieure et/ou une dureté inférieure à celle(s) de la couche en feuille disposée au-dessous de celle-ci.

6. Panneau de sol stratifié selon l'une quelconque des revendications précédentes, **caractérisé en ce que** la couche en feuille (5, 8) est fabriquée sur la base d'une matière plastique thermoplastique et/ou élastomère, en particulier en PP et/ou en PE et/ou en PUR et/ou en PVC.

7. Panneau de sol stratifié selon l'une quelconque des revendications précédentes, **caractérisé en ce que** la couche en feuille (5, 8) présente une épaisseur de feuille entre 20 µm et 1500 µm, en particulier entre 30 µm et 1000 µm, et de préférence entre 50 µm et 500 µm.

8. Panneau de sol stratifié selon l'une quelconque des revendications précédentes, **caractérisé en ce que** la couche en feuille (5) de dessus est transparente ou colorée ou teintée dans la masse.

9. Panneau de sol stratifié selon l'une quelconque des revendications précédentes, **caractérisé en ce que** dans, sur et/ou sous la couche en feuille (5, 8) est prévu au moins un matériau modifiant les propriétés techniques et/ou optiques de la couche en feuille (5, 8).

10. Panneau de sol stratifié selon l'une quelconque des revendications précédentes, **caractérisé en ce qu'**entre la couche en feuille (5) de dessus et une couche en feuille (8) se trouvant au-dessous de la couche en feuille (5) de dessus, une impression (6) et/ou une couche en papier décor (9) avec un décor est/sont prévue(s).

11. Panneau de sol stratifié selon l'une quelconque des revendications précédentes, **caractérisé en ce que** la couche en feuille (5, 8) est collée et/ou pressée à chaud avec la couche en papier décor (9) et/ou avec la plaque de support (2).

12. Panneau de sol stratifié selon l'une quelconque des revendications précédentes, **caractérisé en ce que** la couche supérieure (4) présente du côté inférieur une couche en feuille en PUR comme agent adhésif par rapport à la plaque de support (2).

13. Panneau de sol stratifié selon l'une quelconque des revendications précédentes, **caractérisé en ce que** pour le scellement de surface ultérieur et/ou pour l'élimination des traces d'utilisation, comme des marques d'usure, des rayures ou similaires, un vernis clair, en particulier sous forme d'une dispersion, à appliquer à la couche en feuille de dessus, est prévu.

14. Panneau de sol stratifié selon la revendication 13, **caractérisé en ce que** le vernis clair est diluable dans l'eau et produit sur la base d'une matière plastique thermoplastique et/ou élastomère, en particulier de PP et/ou de PE et/ou de PUR et/ou de PVC.
